# EUROPEAN PATENT SPECIFICATION

(11) **EP 1 623 961 B1**
(45) Date of publication and mention of the grant of the patent: **23.05.2012**
(21) Application number: 04730649.3
(22) Date of filing: 30.04.2004
(51) Int. Cl.: C03B 29/08, C03B 35/16, C03B 23/025

(54) **GLASS PLATE HEATING METHOD, AND HEATING FURNACE**
VERFAHREN ZUM ERHITZEN EINER GLASPLATTE UND HEIZOFEN
PROCEDE DE CHAUFFAGE DE PLAQUES VITREES ET FOUR DE RECHAUFFAGE

(30) Priority: 09.05.2003 JP 2003131430
(43) Date of publication of application: 08.02.2006
(73) Proprietor: Asahi Glass Company, Limited, Chiyoda-ku Tokyo 100-8405 (JP)
(72) Inventor: MAEDA, Kenji, c/o Asahi Glass Company, Limited, Chita-gun, Aichi 4702514, (JP)
(74) Representative: Müller-Boré & Partner Patentanwälte
(86) International application number: PCT/JP2004/006271
(87) International publication number: WO 2004/099094

(56) References cited:
- EP-A- 0 928 779
- EP-A- 1 140 713
- JP-A- 4 006 118
- JP-A- 4 295 021
- JP-A- 6 271 325
- JP-A- 10 279 323
- JP-A- 11 199 254
- JP-A- 2000 302 274
- JP-A- 2001 089 172
- JP-A- 2001 307 815
- US-A- 4 936 890
- US-A- 5 173 102
- US-A- 6 092 393
- PATENT ABSTRACTS OF JAPAN vol. 2000, no. 16, 8 May 2001 (2001-05-08) -& JP 2001 012860 A (NGK INSULATORS LTD), 19 January 2001 (2001-01-19)
- PATENT ABSTRACTS OF JAPAN vol. 017, no. 108 (C-1032), 5 March 1993 (1993-03-05) -& JP 04 295021 A (ASAHI GLASS CO LTD), 20 October 1992 (1992-10-20)
- PATENT ABSTRACTS OF JAPAN vol. 2002, no. 03, 3 April 2002 (2002-04-03) -& JP 2001 307815 A (MEIKOSHA:KK), 2 November 2001 (2001-11-02)

## Description

The present invention relates to a method for heating a glass sheet and a heating furnace therefor, more particularly, a method for heating a glass sheet and a heating furnace therefor, which heat a glass sheet to a softening temperature or higher in order to bend the glass sheet into a certain curved shape for preparation of a windowpane for an automobile.

When a windowpane for an automobile (in particular a glass sheet for preparation of laminated glass) is bent, two glass sheets, which have been cut in a shape having certain dimensions, have been put on a ring-shaped mold, being put one after the other through a mold-releasing agent, such as alumina powder, and have been heated to a glass-softening temperature or higher (normally about 600°C to about 700°C), being conveyed through a tunnel-shaped heating furnace. By this treatment, the glass sheets are softened and sagged under their own weight, being bent in a shape conforming to the shape of the mold.

The inventor has proposed a technique wherein a plurality of electric heater elements is provided on the ceiling of a heating furnace, and the temperatures of the respective heater elements are controlled to provide a temperature distribution with a surface of a glass sheet so as to bend the glass sheet (for example, see JP-A-10-279323).

Additionally, the inventor has proposed a technique wherein heaters are suspended from and supported by the ceiling of a heating furnace with an air layer between each of the heaters and the ceiling in order to transfer heat from the heaters to a glass sheet with good response (for example, see JP-A-10-287436).

WO 01/23310 describes a heating furnace conveying a bending mold of a glass sheet, wherein radiation-heating devices are provided in the heating furnace and wherein a first group of a plurality of heating elements are fixed on an inner wall surface of the heating furnace and a second group of a plurality of heating elements are disposed separably from an inner wall surface of the heating furnace.

The heating furnace disclosed in the second Patent Document is more advantageous than heating furnaces with heaters embedded in the walls thereof in that it is possible to effectively transfer heat from the heaters to a glass sheet. However, it has been recently demanded to develop a heating furnace capable of further effectively transferring heat to a glass sheet in accordance with the dimensions or the thickness of the glass sheet. In particular, when a glass sheet is bent under its own weight, it is important to precisely control the heat distribution in a glass surface. Even a minor deviation in the heat distribution has a great influence on the precision in the bending operation of a product.

In the recent automobile industry, the demand has started arising for a front windshield, which is curved so as to extend beyond the traditional position of a front pillar (a metal member for supporting the lateral sides of the front windshield), the front pillar being shifted to a rearward position in order that a driver can have a wider field of view. It has been difficult to employ the conventional techniques to manufacture a laminated glass sheet having a great curvature on the respective lateral sides stated earlier.

The present invention is proposed in consideration of these circumstances. It is an object of the present invention to provide a method for heating a glass sheet and a heating furnace therefor, which are capable of effectively transferring heat to a glass sheet and precisely controlling the heat distribution in a glass surface.

### DISCLOSURE OF THE INVENTION

The present invention provides a method for heating a glass sheet in a heating furnace as defined in claim 1, comprising a step for putting a glass sheet in a heating furnace, and a step for bringing an electric heater assembly close to the glass sheet, the electric heater assembly including plural heater elements, wherein the respective heater elements can be independently controlled in terms of calorific power.

The heating furnace is divided into a plurality of zones, and the electric heater assembly is disposed in each of the zones, and lifting movements of the electric heater assemblies disposed in the respective zones are independently controlled.

The plural heater elements forming an electric heater assembly are divided into two or more groups, and lifting movements of the heater elements in a group are controlled independently from the lifting movements of the heater elements in a different group.

The plural heater elements forming an electric heater assembly are respectively connected to a power source through elongated and electrically conductive members having plural bending joints.

The present invention also provides a heating furnace for a glass sheet as defined in claim 3, comprising a furnace main body; a mold disposed in the furnace main body to support a glass sheet; an electric heater assembly disposed on a ceiling portion in the furnace main body and including plural heater elements; suspending members for supporting the electric heater assembly in a suspended state in the furnace main body; lifting units coupled to the suspending members to lift up and down the electric heater assembly; and a controller for controlling drive of the lifting units according to a conveyance position of the glass sheet and for controlling heating of the heater elements.

The plural heater elements of the electric heater assembly are respectively connected to a power source through elongated and electrically conductive members having plural bending joints.

In another mode of the present invention, it is preferred that each of the bendable joints comprise a power supply joint unit, which comprises a hinge structure including first and second electrically conductive leads, and an electrically conductive spring structure for giving an urging force to the hinge structure, and that the spring structure urge the first and second leads so that an included angle between the first and second leads keeps an angle.

In the present invention, the electric heater assembly is disposed in each of zones of the heating furnace, which are plural zones divided in the heating furnace, and lifting movements of the electric heater assemblies disposed in the respective zones are controlled by the controller independently from each other.

In another mode of the present invention, it is preferred that the mold comprises a supporting frame, a fixed frame fixed to the supporting frame, and inclinable frames coupled to the fixed frame so as to be inclinable.

In another mode of the present invention, it is preferred that the glass sheet be used for producing an automobile windowpane.

There is also provided, a power supply joint unit comprising a hinge structure including first and second electrically conductive leads, and an electrically conductive spring structure for giving an urging force to the hinge structure, wherein the spring structure urges the first and second leads so that an included angle between the first and second leads keeps an angle.

There is also provided a vertically movable heater comprising an electric heater including plural heater elements, a lifting unit for lifting up and down the respective heater element, and power supply joint units recited herein above, the power supply joint units being respectively connected to the plural heater elements.

### BRIEF DESCRIPTION OF THE DRAWINGS

Fig. 1 is a schematic view showing the heating furnace for a glass sheet according to an embodiment of the present invention;
Fig. 2 is a schematic view showing the heater arrangement in each of heating zones of the heating furnace shown in Fig. 1;
Fig. 3 is a perspective view showing the structure of a lifting device for heaters;
Fig. 4 is an enlarged view showing the structure of a bendable joint for a lead;
Fig. 5 is an exploded view of the bendable joint shown in Fig. 4;
Fig. 6 is a schematic view showing an example of the operation of the lifting device for heaters;
Fig. 7 is a flowchart showing a procedure for heating a glass sheet in heating zones Nos. 3 and 4;
Fig. 8 is a schematic view showing the heating furnace according to another embodiment of the present invention;
Figs. 9(a) to (d) are schematic views showing the lifting action of an electric heater assembly;
Fig. 9(e) is a plan view showing a typical example of the array layout of heater elements forming the electric heater assembly;
Fig. 9(f) is a cross-sectional view taken along the line A-A' of Fig. 9(e); and
Fig. 9(g) is a perspective view showing a heater element.

### Explanation of Reference Numerals

10: heating furnace, 12: computer, 14: keyboard, 16: main unit of computer, 18: display, 20: mold, 40: ceiling heater, 50, 50A and 50B: lifting device for ceiling heater, 52: casing, 54: rod (suspending member), 56: heat-insulated housing, 58: lifting plate, 60: screw bar, 62: screw jack (lifting unit), 64 and 68: supporting frame, 66: cable, 73, 75 and 77: bendable joint, 74, 76, 78 and 80: lead, 86: pin, 88: electrically conductive plate, Nos. 1 and 2: preliminarily heating zone, Nos. 3 and 4: bending zone, No. 5: annealing zone, No. 6: cooling zone

Now, the method and the apparatus for heating a glass sheet, according to a preferred embodiment of the present invention will be described in detail, referring to the accompanying drawings.

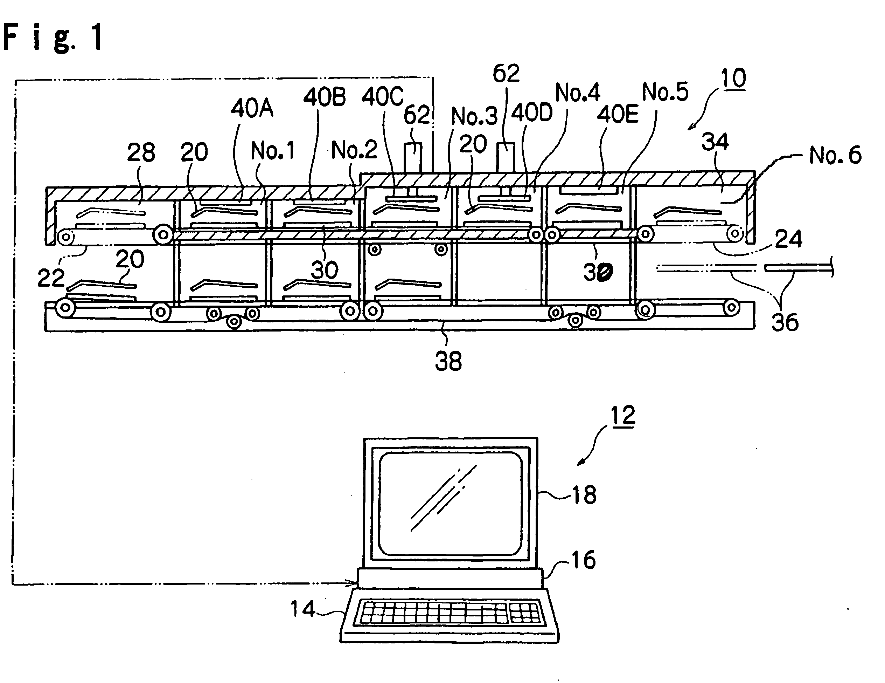

Fig. 1 shows a heating furnace 10, and a computer 12 for collectively controlling device to control, such as electric heater assemblies and a conveyor for production of a curved glass sheet to be used for laminated glass.

The computer 12 (corresponding the controller recited in Claims) includes a keyboard 14, which is used to set the heating temperatures of the respective heater elements of the electric heater assemblies provided in the respective heating zones of the heating furnace 10 and to input operating conditions with respect to a glass sheet to be bent, such as the dimensions, the thickness and a portion to be deeply bent; a main unit 16 of the computer, which stores a calculation program for calculating heights of the respective heater elements of the electric heaters with respect to the glass sheet according to the conditions set and input as stated above; and a display 18, which displays the calculation results as well as the functions and the operating statuses of the heating furnace 10.

The heating furnace 10 and the computer 12 are connected together so as to be able to exchange various kinds of data therebetween. The heating operation of each of the heater elements of the electric heater in each of the heating zones is controlled based on desired heater temperatures input through the keyboard 14. Information on temperatures in the heating furnace (the temperature being detected by unshown radiation thermometers) is transmitted to be displayed on the display 18.

The heating furnace 10 has two stories as shown in Fig. 1. The second story forms heating zone No. 1 to heating zone No. 5, and the first story forms a return path for molds 20. Heating zones Nos. 1 and 2 are preliminary heating zones, which heat a glass sheet from room temperature to the softening temperature. Heating zones Nos. 3 and 4 are bending zones, which bend the glass sheet conveyed thereinto by bringing the electric heaters close to the glass sheet. Heating zone No. 5 is an annealing zone, which anneals the bent glass sheet to such a temperature that the glass sheet is not subjected to stress relief. Heating zone No. 6 is a cooling zone, which further cools the annealed glass sheet.

The first story and the second story of the heating furnace 10 are connected together through elevators 22 and 24 at the most upstream and downstream positions of the heating furnace. An unbent glass sheet is put on a mold 20 on the elevator 22 positioned on the first story, and the glass sheet is conveyed into a standby chamber 28 located just before preliminary heating zone No. 1 by upward movement of the elevator 22. Then, the glass sheet along with the mold 20 is conveyed into preliminary heating zone No. 1 by a conveyor 30, and the glass sheet is heated, being intermittently conveyed through respective heating zones No. 1 to No. 4.

Specifically, in preliminary heating zones Nos. 1 and 2, the glass sheet is heated to a temperature required for bending operation, by electric heaters 40A, 40B, which are not vertically movable. The electric heaters 40A and the like are coil heaters, which are disposed on respective positions of the furnace walls (the furnace floor, the ceiling and the sidewalls).

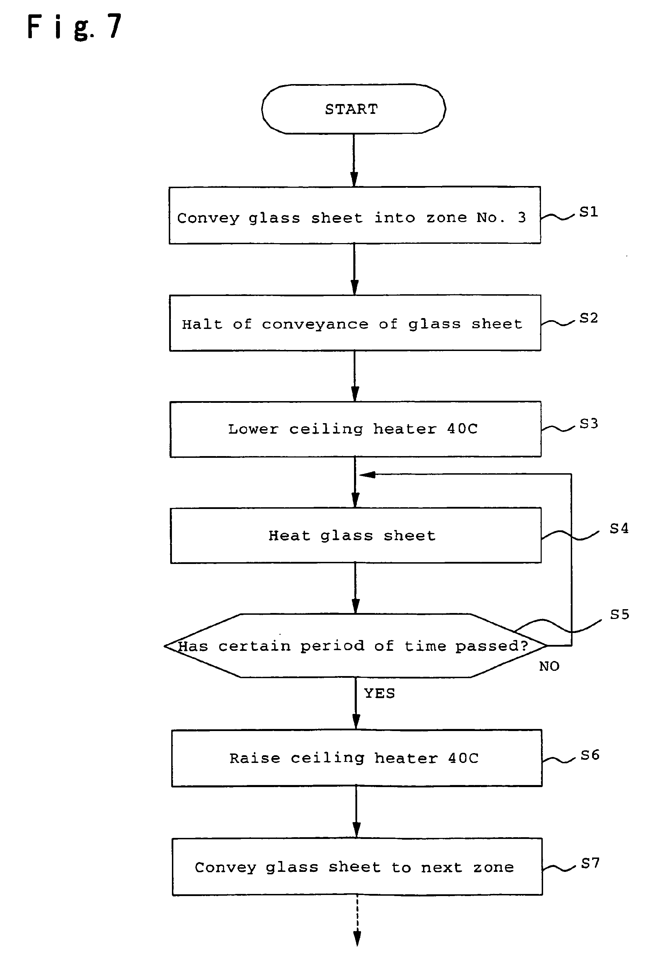

On the other hand, in each of bending zones Nos. 3 and 4, when the glass sheet conveyed thereinto is halted (Steps S1 and S2 in Fig. 7), the electric heater assembly comprising a plurality of heater elements is lowered from the ceiling to be brought close to an upper surface of the glass sheet (Step S3 in Fig. 7), performing heating treatment (Step S4 in Fig. 7). When having performed the heating treatment for a certain period of time (Step S5 in Fig. 7), the electric heater assembly is raised toward the ceiling (Step S6 in Fig. 7) and is halted at a certain position close to the ceiling, while the glass sheet is conveyed into the next zone (Step S7 in Fig. 7). A through hole may be formed in a sidewall of the heating furnace in order to heat a desired portion of the glass sheet by inserting a local heater through the through hole.

In annealing zone No. 5, the glass sheet is gradually cooled by being subjected to radiation heating at a lower temperature than the heating temperatures in the bending zones by an electric heater, which is not vertically movable. In cooling zone No. 6, the glass sheet is further cooled without being heated by an electric heater.

As stated, the glass sheet is softened by having radiation heat transferred from the electric heaters and ambient temperatures raised by the radiation heat. As a result, the glass sheet is bent in a shape conforming to the shape of the mold 20 under its own weight.

The glass sheet, which has been conveyed into the cooling zone 34, is lowered by the elevator 24 and is put on an arm 36 for removal. Then, the glass sheet is conveyed to an unshown subsequent process by movement of the arm 36. The mold 20, from which the glass sheet is removed, is conveyed up to the position of the elevator 22 as the terminal in the direction opposite to the conveyance on the second story by a conveyor 38. The mold 20 stands by for receiving an untreated glass sheet, being located on the elevator 22. When an untreated glass sheet has been conveyed into heating zone No. 1, the elevator 22 is lowered to the first story and stands by at the lowest position until a mold 20 is returned to that position.

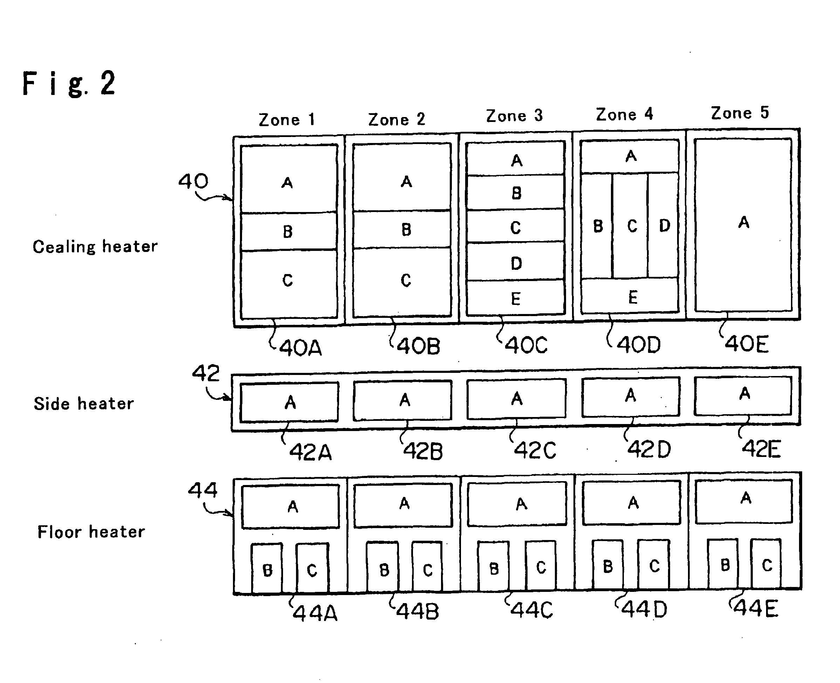

Fig. 2 shows a typical example of the arrangement of the heater elements provided in each of heating zones Nos. 1 to 5 of the heating furnace 10. Each of the heating zones includes a ceiling heater 40 suspended from the ceiling of the heating furnace, side heaters 42 provided on the sidewalls of the heating furnace, and a floor heater 44 provided on the floor of the heating furnace. Each of the electric heaters comprises one or more of heater elements. The respective heater elements are independently controlled in terms of heating temperature.

Each of heating zones Nos. 1 and 2 has a ceiling heater 40A or 40B provided therein so as to include three heater elements A to C sequentially provided in a direction perpendicular to the conveying direction of the glass sheet. Heating zone No. 3 has a ceiling heater 40C provided therein so as to include five heater elements A to E sequentially provided in the direction perpendicular to the conveying direction of the glass sheet.

Heating zone No. 4 has a ceiling heater 40D provided therein so as to include heater elements A and E provided in parallel with each other in the conveying direction of the glass sheet, and heater elements B, C and D sequentially provided between the heater elements A and E in the conveying direction of the glass sheet. Heating zone No. 5 has a ceiling heater 40E provided therein so as to include a single heater element A, being set at a lower heating temperature than the heater elements in the bending zones for the purpose of annealing.

Heating zones Nos. 1 to 5 have respective side heaters 42A to 42E provided therein so that each of the side heaters includes a single heater element A. Heating zones Nos. 1 to 5 have respective floor heaters 44A to 42E provided therein so that the respective floor heaters include three heater elements A to C arranged in the same fashion.

An untreated glass sheet is intermittently conveyed through heating zones Nos. 1 to 5 in this order and is heated by radiation heating from the heater elements of the respective zones and by convection heating from the ambient temperatures in the respective zones.

The arrangement, the number and the dimensions of the heater elements are not limited to those shown in Fig. 2 and may be appropriately modified.

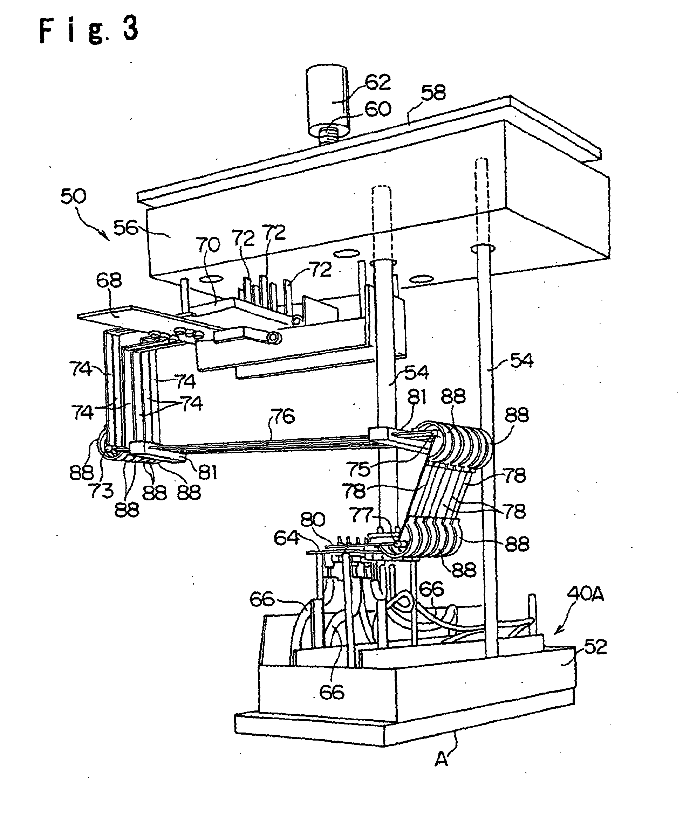

Fig. 3 is a perspective view showing the structure of a ceiling heater lifting device 50. The lifting device 50 is a supporting device, which lifts up and down the electric heater assembly A in the ceiling heater 40C of heating zone No. 3 shown in Fig. 2. Since each of the respective heater elements in the ceiling heater of heating zone No. 4 is supported so as to be liftable by a lifting device, which is configured in substantially the same as the lifting device 50 shown in Fig. 3, explanation of the lifting device for each of the respective heater elements will be omitted.

As shown in Fig. 3, a rectangular casing 52 with the electric heater assembly A housed therein is fixed to lower ends of two rods (suspending members recited in Claims) 54 and 54, which extend in a vertical direction. The rods 54 and 54 are provided so as to pass through a heat-insulated housing 56, which forms a part of a ceiling wall of the heating furnace 10. The rods have upper ends fixed to a lifting plate 58 provided above the heat-insulated housing 56.

The lifting plate 58 has a screw bar 60 fixed to an upper surface thereof in the vertical direction. The screw bar 60 is engaged with a screw jack (the lifting unit recited in Claims) 62 fixed to the heating furnace 10. When the screw jack 62 is rotated, the screw bar 60 works as a feed screw to lift up and down the casing 52 with the electric heater assembly A housed therein, through the lifting plate 58 and the rods 54 and 54. Thus, the distance between a glass sheet in heating zone No. 3 and the heater element A can be adjusted.

The electric heater assembly A is divided into six heater elements (not shown), and the respective heater elements are respectively coupled through cables 66 to six electrodes (not shown) of a supporting frame 64, which is fixed to an upper portion of the casing 52. On the other hand, the heat-insulated housing 56 has a supporting frame 68 with six electrodes (not shown) provided thereon fixed to a lower portion thereof. The electrodes of the supporting frame 68 are arrayed on the supporting frame 68 and connected to an unshown power supply through electrode plates 72, which are arrayed on an insulator 70 of the supporting frame 68.

The respective electrodes of the supporting frame 64 are connected to the respective electrodes of the supporting frame 68 through groups of six elongated plate-shaped leads (electrically conductive members) 74, 76, 78 and 80, adjacent groups of which are coupled with bendable joints 73, 75, 77. The power from the power supply is supplied to the six unshown heater element sections constituting the electric heater assembly A through the leads 74 to 80. It is sufficient that the leads are formed in an elongated shape so as to have a certain rigidity. The leads may be formed in any shape, such as a rectangular shape, a circular shape and an elliptic shape, in section.

Each of the leads 74 is formed in a reverse L-shaped configuration and has an upper end connected to an electrode of the supporting frame 68 and a lower end connected to a left end of one of the lead 76 through the bendable joint 73. Each of the leads 76 is formed in a straight shape and has a right end connected to an upper end of one of the leads 78 through the bendable joint 78. Each of the leads 78 is also formed in a straight shape and has a lower end connected to a right end of one of the leads 80 through the bendable joint 77. Each of the leads 80 is also formed in a straight shape and has a left end connected to an electrode of the supporting frame 64. The leads 74 to 80, which are provided so that six leads are included in each of the groups, are arrayed through an insulator 81 or 82 provided between adjacent groups so as to prevent adjacent leads from contacting each other.

The three bendable joints 73, 75 and 77 have the same structure as one another. Only explanation of the bendable joint 75 will be made, and explanation of the bendable joints 73, 77 will be omitted.

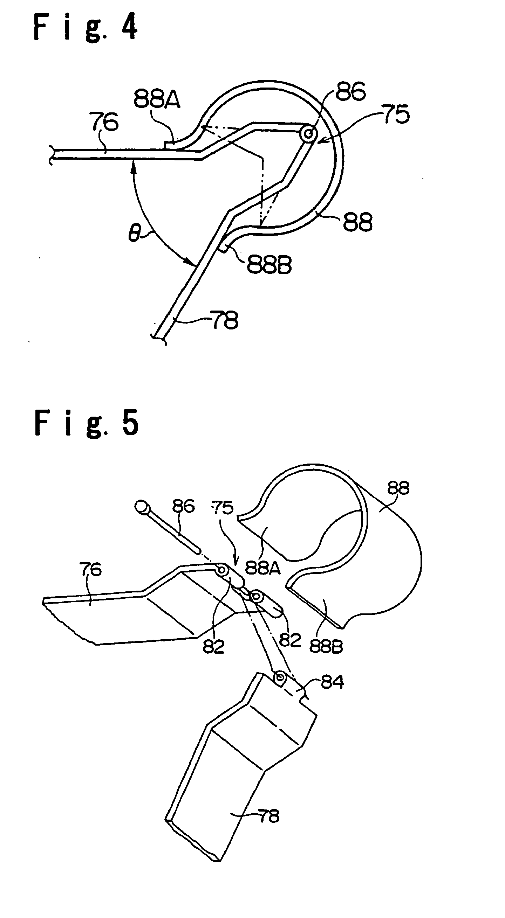

The bendable joint 75 shown in Fig. 4 and Fig. 5 is configured so that each of the leads 76 has a pair of sleeves 82 and 82 formed on a distal end, the corresponding lead 78 has a sleeve 84 formed on a distal end, the sleeve 84 is located between the paired sleeves 82 and 82, and a pin 86 is put through the sleeves 82, 82 and 84. The lead 76 and the corresponding lead 78 are hinged with the bendable joint 75 so that the opening angle θ between both leads is adjustable.

Additionally, electrically conductive plates 88, each of which is formed by bending a plate in a circular shape, are provided so as to surround the bending joint 75. Each of the electrically conductive plates 88 is configured so that it has one end 88A in surface contact with (or welded to) a lead 76 and the other end 88B in surface contact with (or welded to) the corresponding lead 78 so as to conduct an electric current from the lead 76 to the corresponding lead 78 through the corresponding electrically conductive plate 88. This is because each of the pins 86 of the bendable joint 75 has too small an area to flow a large electric current. Each of the electrically conductive plates 88 uses its own spring force to urge its related lead 76 and the corresponding lead 78 so as to reduce the opening angle θ as the included angle between both leads.

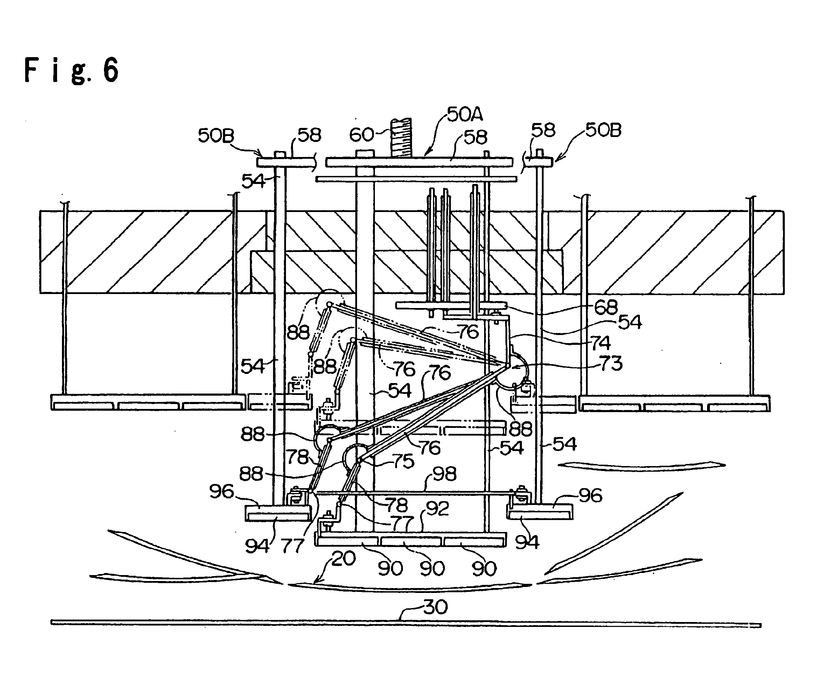

The operation of the ceiling heater lifting device thus configured will be explained, referring to Fig. 6. Although the lifting device shown in Fig. 6 is slightly different from the lifting device shown in Fig. 3 in terms of structure, both devices are the same as each other in terms of basic structure and operation.

The heating zone shown in Fig. 6 includes a first lifting device 50A provided at a central position thereof and a second lifting device 50B provided so as to have parts provided on both sides of the first lifting device 50A. The first lifting device 50A is one that moves up and down a casing 92 for three heater elements 90, 90 and 90 provided at the central position of the heating zone. The second lifting device 50B is one that moves up and down casings 96 and 96 for two heater elements 94 and 94, which are respectively provided on both sides of the casing 92.

The heater elements 90, 90 and 90 (first group), and the heater elements 94 and 94 (second group) form an electric heater assembly. The plural heater elements are classified into two or more of groups, and the respective groups are coupled to different lifting devices. By this arrangement, the lifting movement of the heater elements in one of the groups can be performed independently from the other group so that the heights of the heater elements can be adjusted according to the shape of a glass sheet. Thus, it is possible to keep the optimum distance between the heater elements and the glass sheets.

The casings 96 and 96 are coupled through a coupler 98 and are moved up and down in synchronism with each other by the single second lifting device 50B. In Fig. 6, the screw jack for the first lifting device 50A and the screw jack for the second lifting device 50B (corresponding to the screw jack designated by reference numeral 62 in Fig. 3) are not shown.

When the central three heaters 90, 90 and 90 are brought close to a glass sheet (not shown) put on a mold 20, the screw jack of the first lifting device 50A is driven to lower the casing 92 through the relevant lifting plate 58 and the relevant rods 54 and 54, locating the casing 92 at a lower position shown in solid lines in Fig. 6. Thus, the three heaters 90, 90 and 90 are located near to a bottom portion of the mold 20 formed in an arch shape and effectively heat a substantially central portion of the glass sheet on the mold 20, deeply bending the glass sheet in a shape conforming to the bottom shape of the mold.

The position of the heater elements 90 can be easily modified by controlling the relevant screw jack. The mold 20 comprises plural frames including a supporting frame 20c mounted on the conveyor 30 and having a rectangular shape, a fixed frame 20a fixed to the supporting frame 20c for supporting a central region of a glass sheet, and inclinable frames 20b pivoted to the fixed frame 20a for supporting a peripheral edge region of the glass sheet. Each of the inclinable frames 20b has an inclination angle made steeper by the weight of the glass sheet according to the progress in the bending operation of the glass sheet. The inclinable frames 20b may be coupled to a driving unit (such as a servomotor and crank arms) to forcibly bend a peripheral edge of the glass sheet.

When the outer two heater elements 94 and 94 are brought close to the glass sheet (not shown) on the mold 20, the screw jack of the second lifting device 50B is driven to lower the casings 96 and 96 through the relevant lifting plate 58 and the relevant rods 54 and 54, locating the casings 96 and 96 at an intermediate position shown in solid lines in Fig. 6. Thus, the two heater elements 94 and 94 are located near to a peripheral portion of the mold 20 formed in an arch shape and effectively heat a peripheral portion of the glass sheet on the mold 20, bending the glass sheet in a shape conforming to the shape of the peripheral portion of the mold 20. The position of the heaters 94 can be easily modified by controlling the relevant screw jack.

When the heater elements 90 and 94 are lowered, the leads 74, 76, 78 and 80 supporting the casings 96 and 98 make smooth bending movement like a pantograph, being pivoted at the bendable joints 73, 75 and 77. Thus, the heater elements 90 and 94 can be lifted up and down without trouble.

As stated earlier, in the heating furnace 10 according to this embodiment, the respective electric heaters are supported by the relevant screw jacks 62 through the relevant rods 54 and 54 so as to control the heights of the heaters with respect to a glass sheet by the relevant screw jacks 62 in order to be able to modify the distance of the heaters with respect to the glass sheet at desired timing. By this arrangement, it is possible to effectively transfer heat to the glass sheet since the distance of the heater elements with respect to the glass sheet can be arbitrarily set according to portions of the glass sheet. In other words, the electric heaters, which correspond to different portions of the glass sheet that need more calorific power than the other portions, such as a thick portion and a portion to be deeply bent, can be independently brought close to the different portions of the glass sheet accordingly.

In the heating furnace 10 according to this embodiment, the plural heater elements are connected to the power supply through the elongated plate-shaped leads 74, 76, 78 and 80 having the bendable joints 73, 75 and 77. By this arrangement, even when the electric heaters are moved up and down, adjacent leads are prevented from twining around each other since the leads 74, 76, 78 and 80 make only bending movement, being pivoted at the bendable joints 73, 75 and 77. Thus, it is possible to prevent adjacent leads from interfering each other.

Explanation of this embodiment has been made about the heating furnace 10 wherein a glass sheet is put on a mold 20 and is heated and sagged under its own weight, being bent. However, the heating furnace according to the present invention is applicable to other methods for bending a glass sheet. For example, the heating furnace according to the present invention is also applicable to a heating furnace wherein a heated glass sheet is bent by a press, and a heating furnace wherein a heated glass sheet is bent by, e.g., being conveyed on rollers forming a certain curvature as a whole.

A through hole may be formed in a sidewall of the heating furnace in order to partially heat a glass sheet by inserting a local heater through the through hole. A local press mold may be inserted into the furnace to locally press a glass sheet. Now, other embodiments of the present invention will be described.

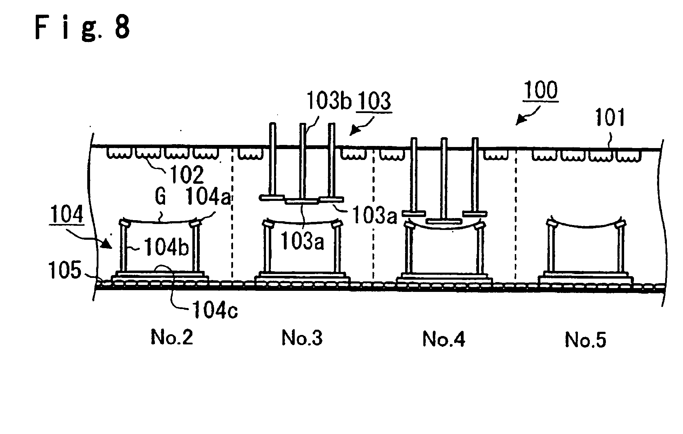

Fig. 8 is a schematic view showing the heating furnace according to another embodiment of the present invention. The heating furnace 100 shown in this figure corresponds to the second story shown in Fig. 1 and includes plural zones (Nos. 2 to 5) in a furnace main body 101, which is built of, e.g. refractory bricks in a tunnel-shape. Each of the zones has fixed heaters 102, liftable heaters (comprising electric heater assemblies 103a and supporting rods 103b) and the like provided on the furnace wall. A glass sheet G is conveyed in the heating furnace 100 by a glass sheet conveying jig (comprising a ring 104a, supporting legs 104b and a carriage 104c) 104. The glass sheet conveying jig 104 is coupled to a chain 105. When the chain 105 is driven by, e.g., a servomotor, the glass sheet conveying jig 104 progresses in the heating furnace.

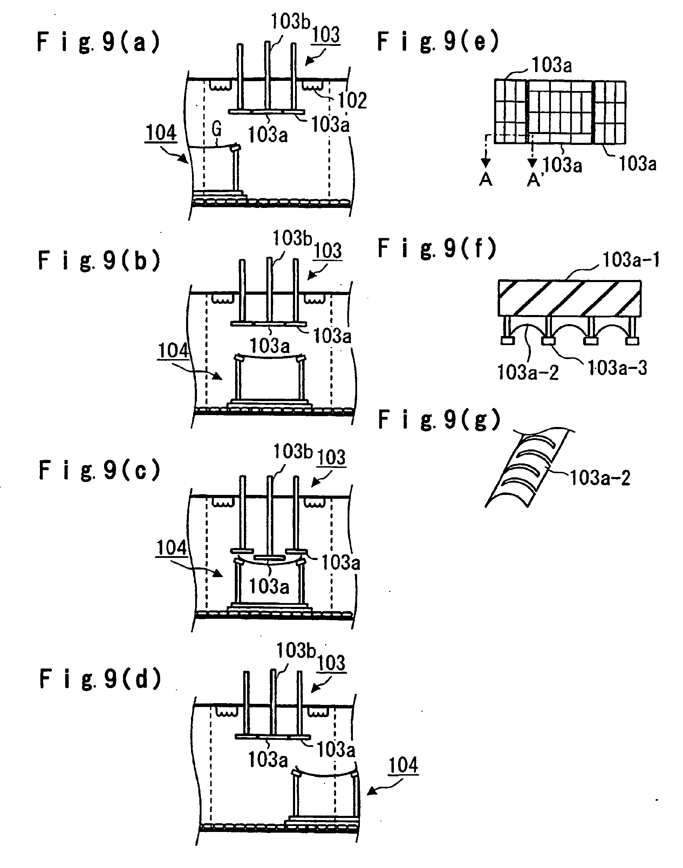

Figs. 9(a) to (d) are schematic views explaining the movement of a liftable heater 103. When, as shown in Fig. 9(a), the glass sheet conveying jig 104 enters bending zone No. 3 or 4 shown in Fig. 8, the liftable heater 103 stands by at a predetermined height in order to prevent the electric heater assemblies 103a from being brought contact with the ring 104a or the like. Then, when the glass sheet conveying jig 104 has arrived just under the liftable heater 103 as shown in Fig. 9(b), the liftable heater 103 lowers as shown in Fig. 9(c).

At that time, the respective electric heater assemblies 103a can be independently controlled in terms of the lifting movement of the liftable heater 103. The respective electric heater assemblies are set at desired heights according to the shape of the glass sheet G or the like, heating the glass sheet G. When the heating treatment has been completed after lapse of a predetermined period of time, the liftable heater 103 returns to the predetermined height again, and the glass sheet conveying jig 104 is conveyed into the next zone as shown in Fig. 9(d). The height of the liftable heater 103 in each of the zones can be appropriately modified according to the bent shape of the glass sheet or the like.

Each of the electric heater assemblies 103a has plural heater elements disposed in, e.g., a two dimensional way as shown in Fig. 9(e), and the respective heater elements are independently controlled in terms of calorific power. An example of the structure of each of the heater elements is shown in Fig. 9(f), wherein resistant metal plates 103a-2 has edges supported by insulators 103a-3 disposed on an insulating carriage 103a-1.

As the heater structure, it is possible to employ, e.g., a heater structure disclosed in U.S.P. 6,492,628, wherein a resistant metal plate 103a-2 having slits alternately formed therein is curved by means of the elastic force thereof as shown in Fig. 9(g). The respective resistant metal plate 303a-2 can be curved in a parabolic shape to increase a heat-collection property, being capable of locally and intensively heating a glass sheet. By two-dimensionally disposing such plural heater elements 103a, it is possible to finely control the temperature distribution in a surface of a glass sheet. the present invention is not limited to the use of such heater elements, and the present invention may employ heater elements having different shapes as needed.

As explained, in the heating furnace for a glass sheet, according to the present invention, the respective electric heater elements are supported by lifting devices through rods so as to be able to modify the heights of the heater elements with respect to a glass sheet by the lifting device. By this arrangement, it is possible to effectively transfer heat to the glass sheet since the distance of the electric heaters with respect to the glass sheet can be arbitrarily set according to portions of the glass sheet. In particular, it is possible to finely control the temperature distribution in a surface of the glass sheet by employing plural two-dimensionally disposed heater elements so that the electric heater elements can be lifted up and down.

In accordance with the present invention, the plural heaters are connected to the power supply through the elongated electrically conductive members having the bendable joints. By this arrangement, when the heaters are moved up and down, electrically conductive members can be prevented from twining around each other.

The ceiling heater in each of the heating zones may be brought close to a glass sheet conveyed thereinto to improve heating efficiency. The ceiling heater may be moved up upon completion of heating to prevent the ceiling heater from colliding with, e.g., the glass sheet (or a jig supporting the glass sheet) when conveying the glass sheet.

The present invention stated earlier is appropriate to manufacture an automobile front windshield, which has a shape having a great curvature at both lateral sides (such as, a shape wherein a front windshield is curved so as to extend beyond the traditional position of a front pillar), which has been difficult to produce.

## Claims

1. A method for heating a glass sheet in a heating furnace(10), comprising:
a step for putting a glass sheet in a heating furnace; and a step for bringing an electric heater assembly (A) close to the glass sheet, the electric heater assembly including plural heater elements;
wherein the respective heater elements (40, 90, 94) can be independently controlled in terms of calorific power,
wherein the heating furnace is divided into a plurality of zones, and the electric heater assembly is disposed in each of the zones; and
wherein lifting movements of the electric heater assemblies disposed in the respective zones are independently controlled, and
wherein the plural heater elements forming an electric heater assembly are divided into two or more groups, and lifting movements of the heater elements in a group are controlled independently from the lifting movements of the heater elements in a different group, and
wherein the plural heater elements forming an electric heater assembly are respectively connected to a power source through elongated and electrically conductive members having plural bending joints (73, 75, 77), and
wherein a heat-insulating housing (56) which forms a part of a ceiling wall of the heating furnace (10), has a supporting frame (68) with electrodes provided thereon fixed to a lower portion thereof, said electrodes being connected through electrically conductive members to the respective electrodes of a supporting frame (64) which is fixed to an upper portion of a casing (52) in which the electric heater assembly is housed.

2. The method according to claim 1, wherein each of the bending joints (73, 75, 77) comprises a power supply joint unit, which comprises a hinge structure including first and second electrically conductive leads, and an electrically conductive spring structure for giving an urging force to the hinge structure; and
wherein the spring structure urges the first and second leads so that an included angle between the first and second leads keeps an angle.

3. A heating furnace (10) for a glass sheet, comprising a furnace main body; a mold (20) disposed in the furnace main body to support a glass sheet; an electric heater assembly (A) disposed on a ceiling portion in the furnace main body and including plural heater elements (40, 90, 94); suspending members for supporting the electric heater assembly in a suspended state in the furnace main body; lifting units (50) coupled to the suspending members to lift up and down the electric heater assembly; and a controller for controlling drive of the lifting units according to a conveyance position of the glass sheet and for controlling heating of the heater elements, and
wherein the plural heater elements of the electric heater assembly are respectively connected to a power source through elongated and electrically conductive members having plural bendable joints (73, 75, 77), and
wherein the electric heater assembly is disposed in each of heating zones of the heating furnace, which are plural zones divided in the heating furnace; and
wherein lifting movements of the electric heater assemblies disposed in the respective zones are controlled by the controller independently from each other, and wherein a heat-insulating housing (56) which forms a part of a ceiling wall of the heating furnace (10), has a supporting frame (68) with electrodes provided thereon fixed to a lower portion thereof, said electrodes being connected through electrically conductive members (74, 76, 78, 80) to the respective electrodes of a supporting frame (64) which is fixed to an upper portion of a casing (52) in which the electric heater assembly is housed.

4. The heating furnace according to Claim 3, wherein each of the bendable joints (73, 75, 77) comprises a power supply joint unit, which comprises a hinge structure including first and second electrically conductive members (74, 76, 78, 80), and an electrically conductive spring structure for giving an urging force to the hinge structure; and
wherein the spring structure urges the first and second leads so that an included angle between the first and second leads keeps an angle.

5. The heating furnace according to Claim 3 or 4, wherein the mold (20) comprises a supporting frame (20c), a fixed frame (20a) fixed to the supporting frame (20c), and inclinable frames (20b) coupled to the fixed frame so as to be inclinable.

6. The heating furnace according to any one of Claims 3 to 5, wherein the glass sheet is used for producing an automobile windowpane.

## Patentansprüche

1. Verfahren zum Erwärmen einer Glasscheibe in einem Wärmeofen (10), umfassend:
einen Schritt des Bringens einer Glasscheibe in einen Wärmeofen und einen Schritt zum Bringen einer elektrischen Heizanordnung (A) nahe an die Glasscheibe, wobei die elektrische Heizanordnung mehrere Heizelemente einschließt,
wobei die entsprechenden Heizelemente (40, 90, 94) unabhängig voneinander hinsichtlich der Heizkraft kontrolliert werden können, wobei der Wärmeofen in eine Vielzahl von Zonen unterteilt ist und die elektrische Heizanordnung in jeder der Zonen angeordnet ist, und
wobei Hebebewegungen der elektrischen Heizeinheiten, angeordnet in den jeweiligen Zonen, unabhängig voneinander kontrolliert werden, und
wobei die mehreren Heizelemente, welche eine elektrische Heizanordnung bilden, in zwei oder mehrere Gruppen unterteilt sind und die Anhebebewegungen der Heizelemente in einer Gruppe unabhängig von den Anhebebewegungen der Heizelemente in einer unterschiedlichen Gruppe kontrolliert werden, und
wobei die mehreren Heizelemente, die eine elektrische Heizanordnung bilden, jeweils an eine Stromquelle durch elongierte und elektrisch leitfähige Elemente mit mehreren Biegeverbindungen (73, 75, 77) verbunden sind, und
wobei ein wärmeisolierendes Gehäuse (56), welches einen Teil einer Deckenwand des Wärmeofens (10) bildet, einen Stützrahmen (68) mit Elektroden darauf angeordnet fixiert an einem unteren Abschnitt davon aufweist, wobei die Elektroden durch elektrisch leitfähige Elemente zu den entsprechenden Elektroden eines Stützrahmens (64) verbunden sind, welcher an einem oberen Abschnitt einer Schalung (52) fixiert ist, in welcher die elektrische Heizanordnung untergebracht ist.

2. Verfahren gemäß Anspruch 1, wobei jede der Biegeverbindungen (73. 75, 77) eine Stromquellen-Verbindungseinheit umfaßt, welche eine Gelenkstruktur, einschließlich erster und zweiter elektrisch leitfähiger Leitungen, und eine elektrisch leitfähige Federstruktur zum Bereitstellen einer drängenden Kraft zu der Gelenkstruktur umfaßt, und wobei die Federstruktur die ersten und zweiten Leitungen derart drängt, daß ein eingeschlossener Winkel zwischen den ersten und zweiten Leitungen einen Winkel beibehält.

3. Wärmeofen (10) für eine Glasscheibe, umfassend einen Ofenhauptkörper, eine Form (20) angeordnet in dem Ofenhauptkörper, um eine Glasscheibe zu stützen, eine elektrische Heizanordnung (A) angeordnet an einem Deckenabschnitt in dem Ofenhauptkörper und einschließend mehrere Heizelemente (40, 90, 94), hängende Elemente zum Stützen der elektrischen Heizanordnung in einem hängenden Zustand in dem Ofenhauptkörper, Anhebeeinheiten (50), gekoppelt an die hängenden Elemente, um die elektrische Heizanordnung hoch und herunter zu heben, und eine Kontrollvorrichtung zum Kontrollieren der Fahrt der anhebenden Einheiten gemäß einer Transportposition der Glasscheibe und zum Kontrollieren des Heizens der Heizelemente, und
wobei die mehreren Heizelemente der elektrischen Heizanordnung an eine Stromquelle durch elongierte und elektrisch leitfähige Elemente mit mehreren biegbaren Verbindungen (73, 75, 77) verbunden sind, und
wobei die elektrische Heizanordnung in jeder der Heizzonen des Wärmeofens angeordnet ist, welche mehrere Zonen unterteilt in dem Wärmeofen sind, und wobei die anhebenden Bewegungen der elektrischen Heizanordnungen, angeordnet in den jeweiligen Zonen, durch die Kontrollvorrichtung unabhängig voneinander kontrolliert werden, und wobei ein wärmeisolierendes Gehäuse (56),
welches ein Teil einer Deckenwand des Wärmeofens (10) ist, einen Stützrahmen (68) mit Elektroden darauf angeordnet fixiert an einem unteren Abschnitt davon aufweist, wobei die Elektroden durch elektrisch leitfähige Elemente (74, 76, 78, 80) an die entsprechenden Elektroden eines Stützrahmens (64), welcher an einem oberen Abschnitt einer Schalung (52) fixiert ist, in welcher die elektrische Heizanordnung untergebracht ist, verbunden sind.

4. Wärmeofen gemäß Anspruch 3, wobei jede der biegbaren Verbindungen (73. 75, 77) eine Stromquellen-Verbindungseinheit umfaßt, welche eine Gelenkstruktur, einschließlich erster und zweiter elektrisch leitfähiger Elemente (74, 76, 78, 80), und eine elektrisch leitfähige Federstruktur zum Bereitstellen einer drängenden Kraft zu der Gelenkstruktur umfaßt, und wobei die Federstruktur die ersten und zweiten Leitungen derart drängt, daß ein eingeschlossener Winkel zwischen den ersten und zweiten Leitungen einen Winkel beibehält.

5. Wärmeofen gemäß Anspruch 3 oder 4, wobei die Form (20) einen Stützrahmen (20c), einen fixierten Rahmen (20a) fixiert an den stützenden Rahmen (20c) und neigbare Rahmen (20b), gekoppelt an den fixierten Rahmen, um neigbar zu sein, umfaßt.

6. Wärmeofen gemäß einem der Ansprüche 3 bis 5, wobei die Glasscheibe zur Herstellung einer Kraftfahrzeugfensterscheibe verwendet wird.

## Revendications

1. Procédé de chauffage d'une feuille de verre dans un four de chauffage (10), comprenant :
une étape pour placer une feuille de verre dans un four de chauffage ; et une étape pour amener un ensemble de chauffage électrique (A) près de la feuille de verre,
l'ensemble de chauffage électrique comprenant plusieurs éléments de chauffage ;
dans lequel les éléments chauffants respectifs (40, 90, 94) peuvent être indépendamment commandés en termes de puissance calorifique,
dans lequel le four de chauffage est divisé en une pluralité de zones, et l'ensemble de chauffage électrique est disposé dans chacune desdites zones ; et
dans lequel les mouvements de levage des ensembles de chauffage électriques disposés dans les zones respectives sont indépendamment commandés ; et
dans lequel la pluralité d'éléments chauffants formant un ensemble de chauffage électrique est divisée en deux groupes ou plus, et les mouvements de levage des éléments chauffants dans un groupe sont commandés indépendamment des mouvements de levage des éléments chauffants dans un groupe différent, et
dans lequel lesdits éléments chauffants formant un ensemble de chauffage électrique sont respectivement connectés à une source d'alimentation par le biais d'éléments électriquement conducteurs et allongés ayant plusieurs joints de pliage (73, 75, 77), et
dans lequel un logement isolant de la chaleur (56) qui forme une partie de la paroi de plafond du four de chauffage (10), dispose d'un cadre de support (68) sur lequel sont placées des électrodes, fixées à une partie inférieure correspondante, lesdites électrodes étant connectées, par le biais d'éléments électriquement conducteurs, aux électrodes respectives d'un cadre de support (64), qui est fixé à une partie supérieure d'un boîtier (52), dans lequel l'ensemble de chauffage électrique est abrité.

2. Procédé selon la revendication 1, dans lequel chacun des joints de pliage (73, 75, 77) comprend une unité de jonction à alimentation électrique, qui comprend une structure d'articulation comprenant un premier et un second fils électriquement conducteurs, et une structure à ressort électriquement conductrice pour donner une force de poussée à la structure d'articulation ; et
dans lequel la structure à ressort pousse le premier et le second fils, de sorte qu'un angle inclus entre le premier et le second fils maintienne un angle.

3. Four de chauffage (10) pour une feuille de verre, comprenant un corps principal de four ; un moule (20) disposé dans le corps principal de four pour supporter une feuille de verre ; un ensemble chauffant électrique (A) disposé sur une partie de plafond dans le corps principal du four et comprenant plusieurs éléments chauffants (40, 90, 94) ; des éléments de suspension pour supporter l'ensemble de chauffage électrique dans un état suspendu, dans le corps principal du four ; des unités de levage (50) raccordées aux éléments de suspension pour lever et baisser l'ensemble de chauffage électrique ; et un dispositif de commande permettant de commander les unités de levage selon une position de transport de la feuille de verre et de contrôler le chauffage des éléments chauffants, et dans lequel lesdits éléments chauffants de l'ensemble de chauffage électrique sont respectivement raccordés à une source électrique, par le biais d'éléments électriquement conducteurs et allongés ayant plusieurs joints de pliage (73, 75, 77) et
dans lequel l'ensemble de chauffage électrique est disposé dans chacune des zones de chauffage du four de chauffage, qui sont plusieurs zones divisées dans le four de chauffage ; et
dans lequel les mouvements de levage des ensembles de chauffage électrique disposés dans les zones respectives sont commandés par le dispositif de commande, indépendamment les uns des autres, et dans lequel un logement isolant de la chaleur (56), qui forme une partie d'une paroi de plafond du four de chauffage (10) dispose d'un cadre de support (68), sur lequel sont placées des électrodes, fixées à une partie inférieure correspondante, lesdites électrodes étant raccordées, par le biais d'éléments électriquement conducteurs (74, 76, 78, 80), aux électrodes respectives d'un cadre de support (64), qui est fixé à une partie supérieure d'un boîtier (52), dans lequel l'ensemble de chauffage électrique est abrité.

4. Four de chauffage selon la revendication 3, dans lequel chacun des joints de pliage (73, 75, 77) comprend une unité de jonction à alimentation électrique, qui comprend une structure d'articulation comprenant un premier et un second éléments électriquement conducteurs (74, 76, 78, 80) et une structure à ressort électriquement conductrice pour donner une force de poussée à la structure d'articulation ; et
dans lequel la structure à ressort pousse le premier et le second fils, de sorte qu'un angle inclus entre le premier et le second fils maintienne un angle.

5. Four de chauffage selon la revendication 3 ou 4, dans lequel le moule (20) comprend un cadre de support (20c), un cadre fixe (20a) fixé au cadre de support (20c) et des cadres inclinables (20b) raccordés au cadre fixe, de façon à être inclinables.

6. Four de chauffage selon l'une quelconque des revendications 3 à 5, dans lequel la feuille de verre est utilisée pour produire une vitre de fenêtre automobile.
